# EUROPÄISCHE PATENTSCHRIFT

(11) **EP 2 585 935 B1**
(45) Veröffentlichungstag und Bekanntmachung des Hinweises auf die Patenterteilung: **14.05.2014**
(21) Anmeldenummer: 11728616.1
(22) Anmeldetag: 22.06.2011
(51) Int. Cl.: G06F 13/42

(54) **VERFAHREN UND VORRICHTUNG ZUR DATENÜBERTRAGUNG MIT VARIABLER BITLÄNGE**
METHOD AND DEVICE FOR TRANSMITTING DATA HAVING VARIABLE BIT LENGTH
PROCÉDÉ ET DISPOSITIF DE TRANSMISSION DE DONNÉES AYANT UNE LONGUEUR DE BITS VARIABLE

(30) Priorität: 23.06.2010 DE 102010030422; 14.06.2011 DE 102011077493
(43) Veröffentlichungstag der Anmeldung: 01.05.2013
(73) Patentinhaber: Robert Bosch GmbH, 70442 Stuttgart (DE)
(72) Erfinder: BOSSE, Carsten, 71638 Ludwigsburg (DE); HOPPERT, Dirk, 74354 Besigheim (DE); WEISSENMAYER, Simon, 71672 Marbach (DE)
(86) Internationale Anmeldenummer: PCT/EP2011/060435
(87) Internationale Veröffentlichungsnummer: WO 2011/161153

(56) Entgegenhaltungen:
- DE-A1- 10 000 305
- DE-A1- 10 153 085
- DE-A1- 10 311 395
- DE-A1- 10 340 165
- DE-A1-102008 000 562
- US-A1- 2008 253 770
- Robert Bosch GmbH: "CAN with Flexible Data-Rate; White Paper, Version 1.0", , April 2011 (2011-04), XP000002658095, Gefunden im Internet: URL:http://www.bosch-semiconductors.de/med ia/pdf/canliteratur/can_fd.pdf [gefunden am 2011-08-31]

## Beschreibung

Die Erfindung betrifft eine Vorrichtung, ein Verfahren sowie eine Schnittstelle zur Übertragung von Daten zwischen wenigstens zwei Teilnehmern eines CAN-Bussystems, wobei die zeitliche Dauer der übertragenen Bits innerhalb eines Datenrahmens mindestens zwei unterschiedliche Werte annehmen kann.

Beispielsweise aus der Offenlegungsschrift DE 100 00 305 A1 ist das Controller Area Network sowie eine als "Time Triggered CAN" (TTCAN) bezeichnete Erweiterung des CAN bekannt. Das beim CAN verwendete Medienzugriffssteuerverfahren beruht auf einer bitweisen Arbitrierung. Bei der bitweisen Arbitrierung können mehrere Teilnehmerstationen gleichzeitig Daten über den Kanal des Bussystems übertragen, ohne dass hierdurch die Datenübertragung gestört wird. Die Teilnehmerstationen können weiterhin beim Senden eines Bits über den Kanal den logischen Zustand (0 oder 1) des Kanals ermitteln. Entspricht ein Wert des gesendeten Bits nicht dem ermittelten logischen Zustand des Kanals, dann beendet die Teilnehmerstation den Zugriff auf den Kanal. Bei CAN wird die bitweise Arbitrierung üblicherweise in einem Arbitrierungsfeld innerhalb eines über den Kanal zu übertragenden Datenrahmens vorgenommen. Nach dem eine Teilnehmerstation das Arbitrierungsfeld vollständig an den Kanal gesendet hat, weiß sie, dass die exklusiven Zugriff auf den Kanal hat. Somit entspricht das Ende der Übertragung des Arbitrierungsfelds einem Beginn eines Freigabeintervalls, innerhalb dessen die Teilnehmerstation den Kanal exklusiv nutzen kann. Gemäß der Protokollspezifikation des CAN dürfen andere Teilnehmerstationen so lange nicht auf den Kanal zugreifen, das heißt Daten an den Kanal senden, bis die sendende Teilnehmerstation ein Prüfsummenfeld (CRC-Feld) des Datenrahmens übertragen hat. Somit entspricht ein Endzeitpunkt der Übertragung des CRC-Felds einem Ende des Freigabeintervalls.

Durch die bitweise Arbitrierung wird eine zerstörungsfreie Übertragung des Datenrahmens über den Kanal erreicht. Hierdurch ergeben sich gute Echtzeiteigenschaften des CAN, wohingegen bei den Medienzugriffssteuerverfahren, bei denen der von einer Teilnehmerstation gesendete Datenrahmen aufgrund einer Kollision mit einem von einer anderen Station gesendeten weiteren Datenrahmen während der Übertragung über den Kanal zerstört werden kann, ein deutlich ungünstigeres Echtzeitverhalten haben, da es aufgrund der Kollision und der dadurch erforderlichen neuen Übertragung des Datenrahmens zu einer Verzögerung der Datenübertragung kommt.

Die Protokolle des CAN beziehungsweise deren Erweiterung TTCAN eignen sich besonders zum Übertragen kurzer Meldungen unter Echtzeitbedingungen. Sollen jedoch größere Datenblöcke über eine CAN-Domäne übertragen werden, dann wird die relativ geringe Bitrate des Kanals zu einem begrenzenden Faktor. Um die korrekte Funktion der bitweisen Arbitrierung zu gewährleisten, muss für die Übertragung eines Bits eine insbesondere von der Ausdehnung des Bussystems, der Signalausbreitungsgeschwindigkeit auf dem Kanal und intrinsischen Verarbeitungszeiten in den Schnittstellenmodulen der Busteilnehmer abhängige Mindestdauer eingehalten werden, denn während der Arbitrierung müssen alle Busteilnehmer ein einheitliches Bild des Buszustands (0 oder 1) und gleichberechtigten Zugriff auf den Buszustand haben. Die Bitrate kann durch Verringern der Dauer der einzelnen Bits daher nicht ohne weiteres erhöht werden.

Um dennoch einen für die Programmierung einer Steuereinheit benötigten relativ großen Datenblock über eine eigentlich für den Anschluss an eine CAN-Domäne vorgesehene Kommunikationsschnittstelle hinreichend schnell übertragen zu können, schlägt die DE 101 53 085 A1 vor, die Kommunikationsschnittstelle zum Übertragen des Datenblocks vorübergehend in einen anderen Kommunikationsmodus umzuschalten, bei dem keine bitweise Arbitrierung durchgeführt wird und somit eine relativ hohe Bitrate möglich ist. Allerdings muss hierbei die Kommunikation mit den Protokollen des CAN für eine gewisse Zeit unterbrochen werden. Kann beispielsweise aufgrund eines Fehlers nicht mehr der Betrieb des Bussystems nach den CAN-Protokollen aufgenommen werden, dann kommt es zu einem Ausfall des Bussystems. Zudem kommt es durch die Übertragung eines relativ großen Datenblock zu einer erheblichen Verzögerung der nachfolgenden gemäß den Protokollen des CAN vorzunehmenden Übertragungen, so dass die Echtzeiteigenschaften des CAN beeinträchtigt werden. Ein Einsatz dieses Verfahrens nicht nur zur Programmierung der Steuereinheit am Ende eines Herstellungsprozesses eines Kraftfahrzeugs oder der Steuereinheit, sondern auch während des Betriebs des Kraftfahrzeugs ist somit nicht sinnvoll.

DE 103 11 395 A1 beschreibt ein zwischen CAN-Kommunikation und einem asymmetrischen, seriellen Kommunikationsprotokoll umschaltbares System, das im asynchronen Modus eine höhere Übertragungsrate ermöglicht, wobei dieses Protokoll jedoch außerhalb des CAN-Standards liegt.

DE 103 40 165 A1 schlägt eine verbesserte Synchronisierung zwischen Sensoren und Aktoren innerhalb eines CAN-Netzwerkes vor. Hierdurch wird eine Erniedrigung der Latenzzeiten erreicht, ohne jedoch die Übertragungsrate zu erhöhen.

US 2008/253770 offenbart einen Datenrahmen für optische Übertragung, wobei die zeitliche Bitlänge innerhalb eines Datenrahmens zwei unterschiedliche Werte annehmen kann. Der erste vorgegebene Bereich des Datenrahmens wird mit der zuletzt eingestellten zeitlichen Bitlänge übertragen.

Aufgabe der Erfindung ist es, ein Verfahren anzugeben, sowie eine Vorrichtung und eine Schnittstelle zu beschreiben, durch welche größere Datenmengen relativ schnell in einem CAN-Netzwerk übertragen werden können und Echtzeitbedingungen bei der Übertragung von Nachrichten über den Bus eingehalten werden können. Diese Aufgabe wird durch das Datenübertragungsverfahren mit den Merkmalen des Anspruchs eins, sowie durch die in den unabhängigen Ansprüchen beschriebene Vorrichtung und Schnittstelle gelöst.

### Vorteile der Erfindung

Die beschriebene Aufgabe wird erfindungsgemäß dadurch gelöst, dass für eine begrenzte Zeit, insbesondere nach erfolgter Arbitrierung innerhalb eines Datenrahmens die Bitlänge, das heißt die zeitliche Dauer der Bits, gegenüber dem für die Arbitrierung genutzten Wert reduziert wird. Anders ausgedrückt, wird die Taktrate des Busses für einen begrenzten Abschnitt innerhalb des Datenfeldes des übertragenen Datenrahmens gegenüber der Basis-Taktrate erhöht. Hierbei kann die Taktrate grundsätzlich auch mehrere unterschiedliche erhöhte Werte annehmen und die Zeitpunkte für die Umschaltung zwischen diesen Werten können beliebig innerhalb des Datenrahmens liegen. Ganz allgemein könnte die Taktrate einen beliebigen Verlauf annehmen, sofern die Busteilnehmer bezüglich dieses Verlaufes ein einheitliches Verständnis haben und so die in den Datenrahmen enthaltenen Informationen einheitlich interpretieren können.

Die Tatsache, das ein Datenrahmen in wenigstens einem Teilbereich eine erfindungsgemäß geänderte Bitlänge aufweist, muss dem Empfänger mitgeteilt werden, damit dieser die gesendeten Daten richtig interpretieren kann. Die Mitteilung an den Empfänger erfolgt über eine Kennzeichnung. Hierbei kann es vorteilhaft sein, abhängig von der Kennzeichnung für die Bitlänge und die Zeitpunkte des Wechsels der Bitlänge abgelegte Werte zu verwenden. Ein Beispiel hierfür wäre eine Kennzeichnung durch ein festgelegtes, noch freies Bit innerhalb des Kopfbereiches des Datenrahmens, wobei für einen der zwei möglichen Werte dieses Bits beispielsweise im kompletten Datenfeld eine um einen für alle Busteilnehmer festgelegten Faktor reduzierte Bitlänge verwendet wird.

Eine andere Möglichkeit ist es, innerhalb der Kennzeichnung oder an einer anderen, festgelegten Stellte innerhalb des Datenrahmens Informationen bezüglich der Bitlänge und / oder der Zeitpunkte des Wechsels der Bitlänge an den Empfänger zu übermitteln. Beispielsweise könnte ein Reduktionsfaktor beziehungsweise -divisor für die Bitlänge als ganze Zahl in den ersten drei Bits des Datenfeldes übermittelt werden, und die mit dem Faktor multiplizierte Bitlänge nach einer festgelegten Umschaltzeit für die verbleibende Dauer des Datenfeldes angewendet werden.

In einer weiteren vorteilhaften Ausführungsform wird die Kennzeichnung in einem vorangegangenen Datenrahmen versendet und auf diesem Wege wenigstens ein Busteilnehmer darauf hingewiesen, dass ein folgender, an ihn gerichteter Datenrahmen eine reduzierte Bitlänge aufweisen wird.

Weiterhin vorteilhaft ist es, wenn zumindest SOF-Bit und Arbitrierungsfeld des Datenrahmens eine Bitlänge aufweisen, die der Basis-Taktrate des Busses entspricht. In diesem Fall kann abhängig vom Ergebnis der Arbitrierung die Reduktion der Bitlänge gezielt nur bei Sender und Empfänger des aktuell übermittelten Datenrahmens erfolgen und Energie eingespart werden, die erforderlich wäre, die korrespondierende Erhöhung der Abtastfrequenz bei allen Busteilnehmern durchzuführen. Die anderen Busteilnehmer, die nicht Ihre Bitlänge umschalten, können dann vorübergehend nicht an der Kommunikation teilnehmen.

Um die Vorrichtungen, die das erfindungsgemäße Verfahren ausführen, sowohl in Bussystemen, deren Teilnehmer durchgängig eine der Basis-Taktrate entsprechende Bitlänge einhalten, als auch in Bussystemen, deren Teilnehmer mit erfindungsgemäß reduzierter Bitlänge arbeiten können, einzusetzen, ist es weiter vorteilhaft, die Vorrichtungen beispielsweise durch einen geeigneten Eingang schaltbar zu gestalten. Die erfindungsgemäß arbeitenden Vorrichtungen sind dann flexibel in alten und neuen Netzwerken einsetzbar.

Um zu vermeiden, dass die mit reduzierter Bitlänge übertragenen Bits bei Busteilnehmern, die nicht ihre Bitlänge umschalten, zu Fehlern führen oder es zu einer fehlerhaften Resynchronisation auf die Flanken der mit reduzierter Bitlänge übertragenen Bits kommt, kann es vorteilhaft sein, bei dem hier beschriebenen Verfahren mindestens während der Übertragung von Daten mit reduzierter Bitlänge die Resynchronisation bei einem oder mehreren Busteilnehmern, insbesondere bei den Busteilnehmern, die nicht ihre Bitlänge umschalten, auszusetzen. Beispielsweise könnte ein Bussystem als Busteilnehmer Full-Knoten und Eco-Knoten aufweisen, wobei die Full-Knoten durch geeignete Mittel wie z.B. höherwertige Oszillatoren eingerichtet sind, die Bitlänge umzuschalten, während die Eco-Knoten nur die übliche Bitlänge nutzen können. Sendet ein Full-Knoten eine Nachricht mit verkürzter Bitlänge, setzen beispielsweise ab dem letzten langen Bit die Eco-Knoten ihre Kommunikation aus und führen auch keine Bit-Resynchronisierung mehr durch. Es ist möglich, das Aussetzen der Resynchronisation von der Erkennung einer bevorstehenden Reduktion der Bitlänge abhängig zu machen, beispielsweise durch eine Abhängigkeit von der Kennung des Datenrahmens bzw. vom Ergebnis der Arbitrierung und/oder von einer geeigneten Kennzeichnung. Die Eco-Knoten nehmen die Kommunikation wieder auf, wenn sie für eine vorgebbare Zeit einen rezessiven Buszustand beobachten, beispielsweise für zehn langsame Bitlängen, was einem End-Of-Frame mit drei nachfolgenden Intermission-Bits entspricht. Für die entsprechende Erkennung ist dann ein ungenauer, kostengünstiger und energiesparender Oszillator ausreichend.

### Zeichnungen

Die Erfindung wird im weiteren anhand der Zeichnungen vorgestellt und näher erläutert.
Figur 1 zeigt ein CAN-Bussystem aus dem Stand der Technik mit mehreren Teilnehmern, die über den Bus Datenrahmen austauschen können.
Figur 2a zeigt schematisch die Struktur eines Datenrahmens nach der CAN-Norm ISO 11898-1.
Figur 2b zeigt schematisch die Struktur eines Datenrahmens mit der erfindungsgemäßen Aufteilung in Bereiche unterschiedlicher Bitlänge.
Figur 3 stellt ein Beispiel für die zeitliche Lage der Kennzeichnung, durch die dem Empfänger die notwendigen Informationen über den Wechsel der Bitlänge mitgeteilt werden, innerhalb des Datenrahmens dar.
Figur 4a und 4b zeigen verschiedene Möglichkeiten für die Verteilung der notwendigen Informationen über den Wechsel der Bitlänge zwischen Datenrahmen und erfindungsgemäßen Busteilnehmern.

### Beschreibung der Ausführungsbeispiele

Im Weiteren werden Ausführungsbeispiele für das erfindungsgemäßes Verfahren und die Vorrichtung beschrieben. Diese konkreten Beispiele werden zur Erläuterung der Ausführung eingesetzt, beschränken aber nicht den Umfang des Erfindungsgedankens.

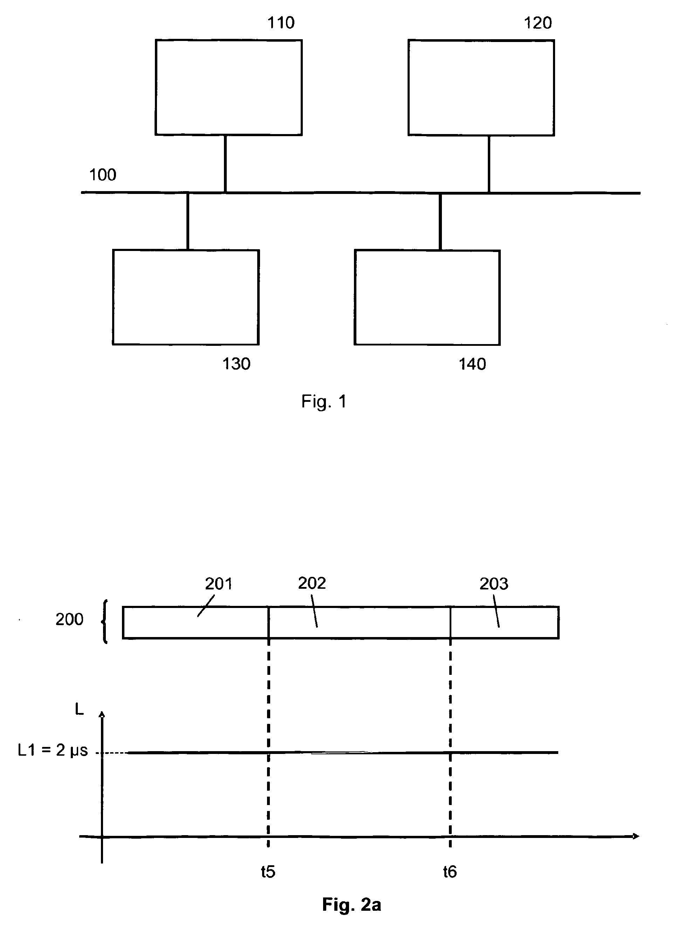

Figur 1 zeigt einen CAN-Bus 100 aus dem Stand der Technik mit mehreren Teilnehmern 110, 120, 130, 140, wie in Figur 1 dargestellt. Zwischen den Teilnehmern werden Datenrahmen gemäß der CAN-Norm ISO 11898-1 ausgetauscht. Für den Bus gilt beispielsweise eine Taktrate von 500 kBaud, das heißt die Bitlänge beträgt in diesem Beispiel 2 µs.

Figur 2a zeigt den schematischen Aufbau eines Datenrahmens 200, der über den Bus 100 übertragen werden kann. Der Datenrahmens lässt sich prinzipiell in einen Kopfbereich 201 (üblicherweise bestehend aus den Feldern "Start of Frame", "Arbitration Field" und "Control Field"), sowie ein Datenfeld 202 und einen Endbereich 203 (üblicherweise bestehend aus CRC-Feld, ACK-Feld und "End of Frame") unterteilen. Dem hier dargestellten Fall beginnt die Übertragung des Datenfelds zum Zeitpunkt t5 und die Übertragung des Endbereichs zum Zeitpunkt t6. Für den gesamten Datenrahmen ist die Taktrate konstant.

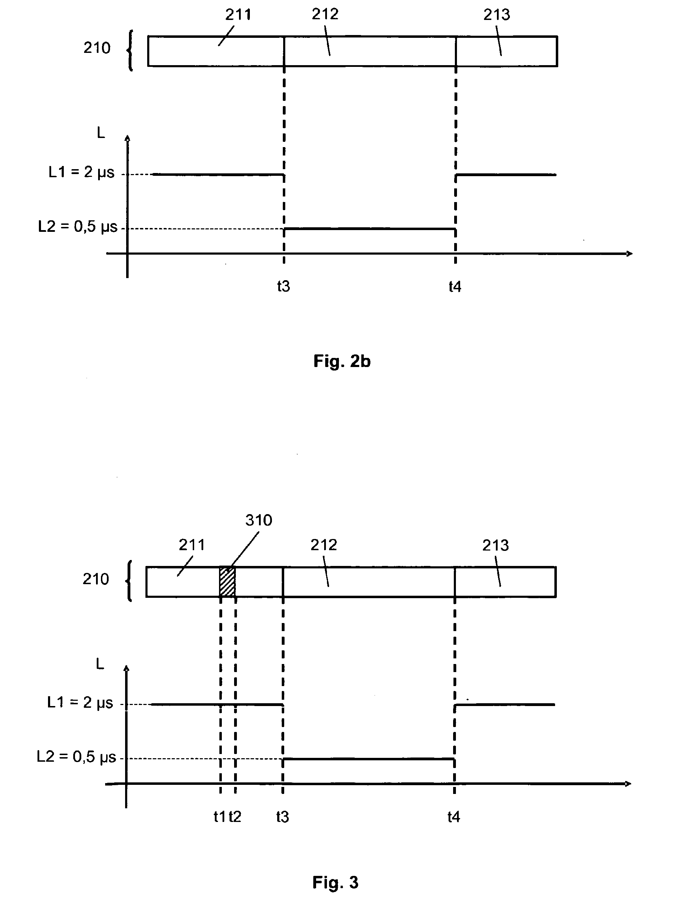

Figur 2b zeigt beispielhaft den erfindungsgemäß abweichenden Aufbau eines Datenrahmens 210, bestehend aus Kopfbereich 211, Datenfeld 212 und Fußbereich 213. Zusätzlich dargestellt sind die Zeitpunkte t3 und t4, die den Beginn und das Ende der Umschaltung der Bitlänge kennzeichnen. In dem hier dargestellten Fall ist für das gesamte Datenfeld die Taktrate beispielsweise um einen Faktor 4 erhöht, beziehungsweise die Bitlänge um den inversen Faktor auf 0,5 µs reduziert. Dementsprechend fällt der Zeitpunkt t3 mit dem Beginn des Datenfelds des Datenrahmens t5 zusammen, und fällt der Zeitpunkt t4 mit dem Beginn des Endbereichs des Datenrahmens t6 zusammen. Die Zeitpunkte t3 und t4 könnten in einer anderen Ausprägung aber auch an anderen Positionen, etwa innerhalb des Datenfeldes liegen.

Figur 3 zeigt erneut den Aufbau eines erfindungsgemäßen Datenrahmens 210. Zusätzlich dargestellt ist die Position der erfindungsgemäßen Kennzeichnung 310 beispielhaft innerhalb des Kopfbereichs des Datenrahmens. In der hier gezeigten Ausprägung könnten eines oder mehrere Bits innerhalb des Kopfbereiches für die Kennzeichnung genutzt werden. Beispielsweise könnte ein reserviertes Bit als Kennzeichnung der um einen Faktor vier reduzierten Bitlänge genutzt werden. In diesem Fall wären die bezeichneten Zeitpunkte t1 und t2 Start und Ende des reservierten Bits, die Zeitpunkte t3 und t4 entsprechen wie schon zuvor Beginn und Ende der Umschaltung der Bitlänge.

Ein Spezialfall der erfindungsgemäßen Kennzeichnung ist die Möglichkeit, die für die Übertragung verwendete, reduzierte Bitlänge abhängig von der Kennung des Datenrahmens im Rahmen der Definition der CAN Matrix festzulegen. Wenn bei dieser Festlegung die potenziellen Sender und Empfänger des jeweiligen Datenrahmens bekannt sind, ist auch bekannt, ob alle Sender und Empfänger für eine Nachricht mit gegebener Kennung zur Nutzung der reduzierten Bitlänge eingerichtet sind, also so genannte "Full-Knoten" sind, oder ob sie hierzu nicht eingerichtet sind, es sich also um "Eco-Knoten" handelt. Abhängig davon kann dann festgelegt werden, dass Datenrahmen mit bestimmten Kennungen oder aus einer Gruppe von Kennungen, insbesondere diejenigen, die nur zwischen Full-Knoten ausgetauscht werden, in einem festgelegten Bereich eine reduzierte Bitlänge verwendet. Dies wird den jeweiligen Empfängern dann nur durch die Kennung selbst mitgeteilt.

Eine weitere, hier aber nicht weiter ausgeführte Möglichkeit ist es, die Kennzeichnung 310 in einem vorangegangenen Datenrahmen zu versenden und auf diesem Wege wenigstens einen Busteilnehmer darauf hinzuweisen, dass ein folgender, an ihn gerichteter Datenrahmen eine reduzierte Bitlänge aufweisen wird. In diesem Fall muss die Kennzeichnung nicht in jedem erfindungsgemäßen Datenrahmen mitversendet werden, sondern nur einmalig oder sporadisch.

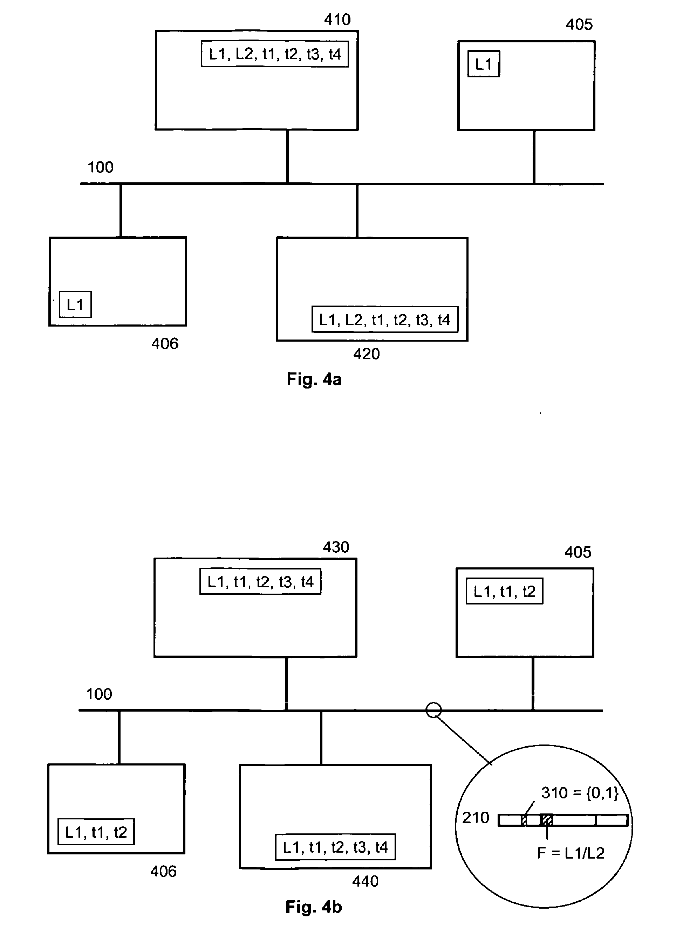

Die Figuren 4a und 4b befassen sich mit dem Informationsgehalt der Kennzeichnung. Hier besteht die Möglichkeit, für verschiedene Typen von Datenrahmen die Informationen über den jeweiligen Verlauf der Bitlänge innerhalb des Datenrahmens bei den Busteilnehmern zu hinterlegen und lediglich eine Typ-Information im Rahmen der Kennzeichnung zu übermitteln. Alternativ können auch Kenngrößen, die die Reduktion der Bitlänge beschreiben, mit der Kennzeichnung versendet werden.

Im dargestellten Fall gibt es nur zwei Typen von Datenrahmen und es wird, lediglich ein Bit des Datenrahmens 210 als Kennzeichnung 310 verwendet, um zwischen Typ A (z.B. Datenrahmen mit einer einheitlichen Bitlänge gemäß Standard-CAN wie Figur 2a) und Typ B (z.B. Datenrahmen mit um Faktor 4 verkürzter Bitlänge im Datenfeld wie Figur 2b) umzuschalten. Die Eco-Busteilnehmer 405 und 406, die Datenrahmen vom Typ A senden und/oder empfangen, kennen die Standard-Bitlänge L1. Die Full-Busteilnehmer 410 und 420, die Datenrahmen vom Typ B senden und / oder empfangen, kennen die beiden Werte der auftretenden Bitlängen L1 und L2, die Position der Kennzeichnung [t1, t2] und Start- und Endzeitpunkt des Bereiches mit reduzierter Bitlänge t3 und t4 passen ihr Sende- und Empfangsverhalten in geeigneter Weise an. Um gegebenenfalls den Empfang vorübergehend zu unterbrechen und die Bit-Resynchronisierung abschalten zu können, kennen die Eco-Teilnehmer 405 und 406 zusätzlich die Position der Kennzeichnung [t1, t2]. Die im Zusammenhang mit Figur 3b besprochene Abhängigkeit der erfindungsgemäßen Reduktion der Bitlänge von der Kennung des Datenrahmens erfordert ebenfalls Kenntnis des kennzeichnenden Bereiches [t1, t2], der in diesem Fall implizit in der Kennung des Datenrahmens liegt, in den Teilnehmern 405 und 406.

Natürlich ist es auch möglich, dass ausschließlich Datenrahmen vom Typ B auf dem Bus verwendet werden und dementsprechend alle Busteilnehmer als Full-Teilnehmer ausgeprägt sind und ihr Sende- und Empfangsverhalten auf eine verkürzte Bitlänge einstellen.

Eine andere Möglichkeit ist in Figur 4b dargesteilt. Hier werden neben der Kennzeichnung 310 auch Teile der Information über den Wechsel der Bitlänge, insbesondere der Faktor F, um den die Busrate erhöht bzw. die Bitlänge reduziert werden soll, übermittelt. Die Full-Busteilnehmer 430 und 440 , die Datenrahmen vom Typ B senden und / oder empfangen, kennen in diesem Beispiel die Position der Kennzeichnung [t1, t2] und Start- und Endzeitpunkt des Bereiches mit reduzierter Bitlänge t3 und t4, berechnen die geänderte Bitlänge als L2 = L1 / F und passen Ihr Sende- und Empfangsverhalten in geeigneter Weise an. Beispielsweise könnten durch Nutzung der ersten drei Bits des Datenfeldes acht verschiedene Faktoren F, beispielsweise die Werte zwischen 1 und 8, übermittelt werden und zu einem definierten Zeitpunkt nach Empfang des 5 Faktors, beispielsweise beim vierten oder fünften Bit des Datenfeldes, die Bitlänge entsprechend umgeschalten werden.

Das Verfahren kann in den durch die Figuren 4a und 4b dargestellten Ausführungsbeispielen so umgesetzt werden, dass eine Umschaltung der 10 Abtastrate genau dann erfolgt, wenn sich ergeben hat, dass ein Datenrahmen vom Typ B mit reduzierter Bitlänge übermittelt wird. In diesem Fall ist es notwendig, dass die Kenntnisse über die reduzierte Bitlänge rechtzeitig beim empfangenden Busteilnehmer vorliegt. Insbesondere muss also die Kennzeichnung vor dem Bereich mit reduzierter Bitlänge, im gezeigten Beispiel 15 also zeitlich vor dem Datenfeld übertragen werden, entweder im selben oder einem vorangegangenen Datenrahmen.

Darüber hinaus ist es auch möglich, dass nur einige der Teilnehmer, insbesondere nur der jeweilige Sender und Empfänger, die Umschaltung der 20 Abtastrate ausführen, wenn ein Datenrahmen vom Typ B mit reduzierter Bitlänge, übermittelt wird.

Full-Knoten weisen zur Ausführung des Verfahrens beispielsweise einen höherwertigen Oszillator auf, während zur Kostenersparnis in den Eco-Knoten 25 auf einen entsprechend aufwändigeren Oszillator verzichtet werden kann. Für die Eco-Knoten kann in dem Zeitraum, in dem Daten mit reduzierter Bitlänge übertragen werden, die Resynchronisation abgeschaltet werden, um eine fehlerhafte Resynchronisation auf Flanken des Bussignales, die durch die Übertragung der Datenrahmen mit reduzierter Bitlänge auftreten kann, zu 30 vermeiden. Es kann auch in den Eco-Knoten der Empfangsprozess vollständig unterbrochen und beispielsweise ein energiesparender Ruhezustand eingenommen werden, in welchem etwa selektiv einzelne Bausteine des Eco-Knotens nicht mit Spannung versorgt werden. Diese Abschaltung und / oder Unterbrechung kann von der Erkennung einer bevorstehenden Reduktion der 35 Bitlänge abhängig gemacht werden. Hierzu kann die erfindungsgemäße Kennzeichnung der Datenrahmen herangezogen werden, d.h. die Eco-Busteilnehmer würden bei Erkennen einer Kennzeichnung 310, die einen Datenrahmen vom Typ A mit verkürzter Bitlänge signalisiert, die Resynchronisation oder Kommunikation für diesen Datenrahmen abschalten. Sie nehmen die Resynchronisation oder Kommunikation beispielsweise wieder auf, wenn sie für eine vorgebbare Zeit einen rezessiven Buszustand beobachten, beispielsweise für zehn langsame Bitlängen, was einem End-Of-Frame mit drei nachfolgenden Intermission-Bits entspricht.

Ebenfalls möglich wäre, dass eine Typklassifizierung der Datenrahmen (im beispielhaft dargestellten Fall nach Typ A bzw. Typ B) im Rahmen der Definition der CAN Matrix festgelegt wird, beispielsweise je nachdem, ob der Sender und die Empfänger des jeweiligen Datenrahmens Full-Knoten oder Eco-Knoten sind, und die Resynchronisation für die auf diesem Weg festgelegten Typ B-Datenrahmen abgeschaltet wird. Hierzu müssten die entsprechenden Adresslisten bzw. -filter in den Busteilnehmern mit der entsprechenden Typ-Information versehen werden.

## Patentansprüche

1. Verfahren zur seriellen Datenübertragung in einem Bussystem mit mindestens zwei Busteilnehmern, die über den Bus Datenrahmen austauschen, wobei die Busteilnehmer abhängig von einer Kennung entscheiden, welche Datenrahmen sie empfangen,
wobei die Datenrahmen einen logischen Aufbau gemäß der CAN-Norm ISO 11898-1 aufweisen,
**dadurch gekennzeichnet, dass** die zeitliche Bitlänge (L1, L2) innerhalb eines Datenrahmens mindestens zwei unterschiedliche Werte annehmen kann,
wobei für wenigstens einen ersten vorgegebenen oder vorgebbaren Bereich innerhalb des Datenrahmens die zeitliche Bitlänge (L1) den Vorgaben der CAN-Norm ISO 11898-1 entspricht,
wobei in wenigstens einem zweiten vorgegebenen oder vorgebbaren Bereich die zeitliche Bitlänge (L2) gegenüber dem ersten Bereich reduziert ist,
wobei Wechsel der zeitlichen Bitlänge vom Sender durch eine im selben oder einem der vorangegangenen Datenrahmen enthaltene Kennzeichnung (310) signalisiert werden.

2. Verfahren gemäß Anspruch 1,
**dadurch gekennzeichnet, dass** die Kennzeichnung (310) innerhalb des ersten vorgegebenen oder vorgebbaren Bereiches des gekennzeichneten Datenrahmens liegt.

3. Verfahren gemäß Anspruch 1 oder 2,
**dadurch gekennzeichnet, dass** der erste Bereich zumindest das SOF-Bit und das Arbitrierungsfeld umfasst.

4. Verfahren gemäß Anspruch 2 oder 3,
**dadurch gekennzeichnet, dass** die Kennzeichnung (310) sich aus Teilen oder der Gesamtheit der Kennung des gekennzeichneten Datenrahmens ergibt.

5. Verfahren gemäß Anspruch 2 oder 3,
**dadurch gekennzeichnet, dass** die Kennzeichnung (310) durch ein einzelnes Bit innerhalb des ersten Bereiches erfolgt.

6. Verfahren gemäß einem der vorangegangenen Ansprüche,
**dadurch gekennzeichnet, dass** die zeitliche Bitlänge genau zwei unterschiedliche Werte (L1, L2) annehmen kann.

7. Verfahren gemäß einem der vorangegangenen Ansprüche,
**dadurch gekennzeichnet, dass** neben der Kennzeichnung (310) wenigstens eine Information (F) übertragen wird, aus welcher die in dem wenigstens einen zweiten Bereich zu verwendende Bitlänge ableitbar ist.

8. Verfahren gemäß einem der vorangegangenen Ansprüche,
**dadurch gekennzeichnet, dass** der erste Bereich einige Bits des Datenfeldes umfasst und in diesen Bits die wenigstens eine Information (F) übertragen wird.

9. Verfahren gemäß Anspruch 1,
**dadurch gekennzeichnet, dass** die Kennzeichnung (310) in einem vorangegangenen Datenrahmen versendet wird und durch die Kennzeichnung wenigstens ein Busteilnehmer darauf vorbereitet wird, dass ein folgender, an ihn gerichteter Datenrahmen eine reduzierte Bitlänge aufweisen wird.

10. Verfahren gemäß einem der vorangegangenen Ansprüche,
**dadurch gekennzeichnet, dass** eine erste Gruppe von Busteilnehmern in Abhängigkeit von der Kennzeichnung (310) eine Reduzierung der Bitlänge ausführt und eine zweite Gruppe von Busteilnehmern in Abhängigkeit von der Kennzeichnung (310) die Bit-Resynchronisierung aussetzt und oder den Empfangsprozess unterbricht und / oder einen Ruhezustand einnimmt.

11. Verfahren gemäß Anspruch 10,
**dadurch gekennzeichnet, dass** die erste Gruppe von Busteilnehmern alle Busteilnehmer umfasst, welche als Full-Knoten ausgelegt und daher zur Anwendung der verkürzten Bitlänge eingerichtet sind.

12. Verfahren gemäß Anspruch 10,
**dadurch gekennzeichnet, dass** die erste Gruppe von Busteilnehmern alle Busteilnehmer umfasst, welche als Full-Knoten ausgelegt und daher zur Anwendung der verkürzten Bitlänge eingerichtet sind, und die entweder Sender oder Empfänger des gerade übertragenen Datenrahmens sind.

13. Vorrichtung zur seriellen Datenübertragung in einem Bussystem mit mindestens zwei Busteilnehmern, die über den Bus Datenrahmen austauschen, wobei die Busteilnehmer abhängig von einer Kennung entscheiden, welche Datenrahmen sie empfangen,
wobei die Datenrahmen einen logischen Aufbau gemäß der CAN-Norm ISO 11898-1 aufweisen,
**dadurch gekennzeichnet, dass** Mittel vorgesehen sind, um die zeitliche Bitlänge (L1, L2) innerhalb eines Datenrahmens zwischen mindestens zwei unterschiedlichen Werte umzuschalten,
wobei für wenigstens einen ersten vorgegebenen oder vorgebbaren Bereich innerhalb des Datenrahmens die zeitliche Bitlänge (L1) den Vorgaben der CAN-Norm ISO 11898-1 entspricht,
wobei in wenigstens einem zweiten vorgegebenen oder vorgebbaren Bereich die zeitliche Bitlänge (L2) gegenüber dem ersten Bereich reduziert ist,
wobei Wechsel der zeitlichen Bitlänge vom Sender durch eine im selben oder einem der vorangegangenen Datenrahmen enthaltene Kennzeichnung (310) signalisiert werden.

14. Vorrichtung gemäß Anspruch 13,
**dadurch gekennzeichnet, dass** Mittel vorgesehen sind, um ein Datenübertragungsverfahren gemäß einem der Ansprüche 2 bis 9 auszuführen.

15. Vorrichtung zur seriellen Datenübertragung in einem Bussystem mit mindestens zwei Busteilnehmern, die über den Bus Datenrahmen austauschen, wobei die Busteilnehmer abhängig von einer Kennung entscheiden, welche Datenrahmen sie empfangen,
wobei die Datenrahmen einen logischen Aufbau gemäß der CAN-Norm ISO 11898-1 aufweisen,
**dadurch gekennzeichnet, dass** Wechsel der zeitlichen Bitlänge vom Sender durch eine im selben oder einem der vorangegangenen Datenrahmen enthaltene Kennzeichnung (310) signalisiert werden,
wobei Mittel vorgesehen sind, um in Abhängigkeit von der Kennzeichnung (310) die Bit-Resynchronisierung auszusetzen und / oder den Empfangsprozess zu unterbrechen und / oder einen Ruhezustand einzunehmen.

16. Vorrichtung gemäß Anspruch 15,
**dadurch gekennzeichnet, dass** die Bit-Resynchronisierung ausgesetzt wird und / oder der Empfangsprozess unterbrochen wird und / oder ein Ruhezustand eingenommen wird, sofern anhand der Kennzeichnung (310) erkannt wird, dass der die Kennzeichnung enthaltende Datenrahmen in mindestens zwei Bereichen mindestens zwei unterschiedliche Werte der Bitlänge aufweist.

17. Vorrichtung gemäß Anspruch 16,
**dadurch gekennzeichnet, dass** die Bit-Resynchronisierung ausgesetzt wird und / oder der Empfangsprozess unterbrochen wird und / oder ein Ruhezustand eingenommen wird, sofern anhand der Kennung erkannt wird, dass der durch die Kennung kenntlich gemachte Datenrahmen nicht durch die Vorrichtung eingelesen werden muss.

18. Vorrichtung gemäß einem Ansprüche 13 bis 17,
**dadurch gekennzeichnet, dass** die Vorrichtung durch ein Eingangssignal schaltbar ausgeführt ist und zwischen einem Verhalten gemäß CAN-Norm ISO 11898-1 und dem erfindungsgemäß modifizierten Verhalten umgeschaltet werden kann.

## Claims

1. Method for serial data transmission in a bus system having at least two bus subscribers that interchange data frames via the bus, wherein the bus subscribers take an identifier as a basis for deciding which data frames they receive,
wherein the data frames have a logic structure based on the ISO 11898-1 CAN standard,
**characterized in that** the temporal bit length (L1, L2) within a data frame can assume at least two different values,
wherein for at least one first prescribed or prescribable range within the data frame the temporal bit length (L1) conforms to the specifications of the ISO 11898-1 CAN standard,
wherein in at least one second prescribed or prescribable range the temporal bit length (L2) is reduced in comparison with the first range,
wherein changes of the temporal bit length are signalled by the sender by a flag (310) that the same or one of the preceding data frames contains.

2. Method according to Claim 1, **characterized in that** the flag (310) is located within the first prescribed or prescribable range of the flagged data frame.

3. Method according to Claim 1 or 2,
**characterized in that** the first range comprises at least the SOF bit and the arbitration field.

4. Method according to Claim 2 or 3,
**characterized in that** the flag (310) is obtained from portions or the whole of the identifier of the flagged data frame.

5. Method according to Claim 2 or 3,
**characterized in that** the flag (310) is provided by a single bit within the first range.

6. Method according to one of the preceding claims,
**characterized in that** the temporal bit length can assume precisely two different values (L1, L2).

7. Method according to one of the preceding claims,
**characterized in that** besides the flag (310) at least one piece of information (F) is transmitted from which it is possible to derive the bit length to be used in the at least one second range.

8. Method according to one of the preceding claims,
**characterized in that** the first range comprises a few bits of the data field and these bits are used to transmit the at least one piece of information (F).

9. Method according to Claim 1,
**characterized in that** the flag (310) is sent in a preceding data frame and the flag prepares at least one bus subscriber for the fact that a subsequent data frame that is sent to said bus subscriber will have a reduced bit length.

10. Method according to one of the preceding claims,
**characterized in that** a first group of bus subscribers takes the flag (310) as a basis for reducing the bit length and a second group of bus subscribers takes the flag (310) as a basis for suspending the bit resynchronization and/or interrupting the reception process and/or adopting a quiescent state.

11. Method according to Claim 10,
**characterized in that** the first group of bus subscribers comprises all bus subscribers that are designed as full nodes and are therefore set up to apply the shortened bit length.

12. Method according to Claim 10,
**characterized in that** the first group of bus subscribers comprises all bus subscribers that are designed as full nodes and are therefore set up to apply the shortened bit length, and that are either senders or receivers of the data frame that has just been transmitted.

13. Apparatus for serial data transmission in a bus system having at least two bus subscribers that interchange data frames via the bus, wherein the bus subscribers take an identifier as a basis for deciding which data frames they receive,
wherein the data frames have a logic structure based on the ISO 11898-1 CAN standard,
**characterized in that** means are provided in order to change over the temporal bit length (L1, L2) within a data frame between at least two different values, wherein for at least one first prescribed or prescribable range within the data frame the temporal bit length (L1) conforms to the specifications of the ISO 11898-1 CAN standard,
wherein in at least one second prescribed or prescribable range the temporal bit length (L2) is reduced in comparison with the first range,
wherein changes of the temporal bit length are signalled by the sender by a flag (310) that the same or one of the preceding data frames contains.

14. Apparatus according to Claim 13, **characterized in that** means are provided in order to execute a data transmission method according to one of Claims 2 to 9.

15. Apparatus for serial data transmission in a bus system having at least two bus subscribers that interchange data frames via the bus, wherein the bus subscribers take an identifier as a basis for deciding which data frames they receive,
wherein the data frames have a logic structure based on the ISO 11898-1 CAN standard,
**characterized in that** changes of the temporal bit length are signalled by the sender by a flag (310) that the same or one of the preceding data frames contains, wherein means are provided in order to take the flag (310) as a basis for suspending the bit resynchronization and/or interrupting the reception process and/or adopting a quiescent state.

16. Apparatus according to Claim 15,
**characterized in that** the bit resynchronization is suspended and/or the reception process is interrupted and/or a quiescent state is adopted if the flag (310) is used to recognize that the data frame containing the flag has at least two different values of the bit length in at least two ranges.

17. Apparatus according to Claim 16,
**characterized in that** the bit resynchronization is suspended and/or the reception process is interrupted and/or a quiescent state is adopted if the identifier is used to recognize that the data frame distinguished by the identifier does not need to be read in by the apparatus.

18. Apparatus according to one of Claims 13 to 17, **characterized in that** the apparatus is designed to be able to be switched by an input signal and can be changed over between a behaviour based on the ISO 11898-1 CAN standard and the behaviour modified in accordance with the invention.

## Revendications

1. Procédé de transfert de données en série dans un système de bus qui présente au moins deux participants qui changent des trames de données par l'intermédiaire du bus,
les participants décidant selon une identification quelles trames de données ils reçoivent,
les trames de données présentant une structure logique conforme à la norme CAN ISO 11898-1, **caractérisé en ce que**
les durées (L1, L2) de bits à l'intérieur d'une trame de données peuvent prendre au moins deux valeurs différentes,
**en ce que** pour au moins une première plage prédéterminée ou apte à être prédéterminée à l'intérieur de la trame de données, la durée (L1) de bits correspond aux stipulations de la norme CAN ISO 11898-1,
**en ce que** dans au moins une deuxième plage prédéterminée ou apte à être prédéterminée, la durée (L2) de bits est réduite par rapport à la première plage, et
**en ce que** l'alternance des durées de bits sont signalées par l'émetteur par une caractérisation (310) que contient la même trame de données ou une trame de données précédente.

2. Procédé selon la revendication 1, **caractérisé en ce que** la caractérisation (310) est située à l'intérieur de la première plage prédéterminée ou apte à être prédéterminée de la trame de données caractérisée.

3. Procédé selon les revendications 1 ou 2, **caractérisé en ce que** la première plage comprend au moins le bit SOF et le champ d'arbitrage.

4. Procédé selon les revendications 2 ou 3, **caractérisé en ce que** la caractérisation (310) découle de parties ou de la totalité de l'identification de la trame de données caractérisée.

5. Procédé selon les revendications 2 ou 3, **caractérisé en ce que** la caractérisation (310) résulte d'un unique bit présent à l'intérieur de la première plage.

6. Procédé selon l'une des revendications précédentes, **caractérisé en ce que** la durée de bits peut prendre exactement deux valeurs (L1, L2) différentes.

7. Procédé selon l'une des revendications précédentes, **caractérisé en ce qu'**au moins une information (F) qui permet de déduire la longueur de bits à utiliser dans la ou les deuxièmes plages est transmise en plus de la caractérisation (310).

8. Procédé selon l'une des revendications précédentes, **caractérisé en ce que** la première plage comporte certains bits du champ de données et **en ce que** la ou les informations (F) sont transmises dans ces bits.

9. Procédé selon la revendication 1, **caractérisé en ce que** la caractérisation (310) est envoyée dans une trame de données précédente et **en ce que** la caractérisation prépare au moins un participant au fait qu'une trame de données suivante qu'il lui est adressée présentera une durée réduite de bits.

10. Procédé selon l'une des revendications précédentes, **caractérisé en ce qu'**un premier groupe de participants exécute une réduction de la longueur des bits en fonction de la caractérisation (310) et **en ce qu'**en fonction de la caractérisation (310), un deuxième groupe de participants exclut la resynchronisation des bits, interrompt l'opération de réception et/ou prend un état de repos.

11. Procédé selon la revendication 10, **caractérisé en ce que** le premier groupe de participants comporte tous les participants conçus comme noeuds de remplissage et conçus pour utiliser la longueur raccourcie de bits.

12. Procédé selon la revendication 10, **caractérisé en ce que** le premier groupe de participants comporte tous les participants conçus comme noeuds de remplissage et qui sont des émetteurs ou des récepteurs de la trame de données qui vient d'être transmise.

13. Dispositif de transfert de données en série dans un système de bus qui présente au moins deux participants qui changent des trames de données par l'intermédiaire du bus,
les participants décidant selon une identification quelles trames de données ils reçoivent,
les trames de données présentant une structure logique conforme à la norme CAN ISO 11898-1, **caractérisé en ce que**
des moyens sont prévus pour commuter la durée (L1, L2) de bits à l'intérieur d'une trame de données entre au moins deux valeurs différentes,
**en ce que** pour au moins une première plage prédéterminée ou apte à être prédéterminée à l'intérieur de la trame de données, la durée (L1) de bits correspond aux stipulations de la norme CAN ISO 11898-1,
**en ce que** dans au moins une deuxième plage prédéterminée ou apte à être prédéterminée, la durée (L2) de bits est réduite par rapport à la première plage, et
**en ce que** l'alternance des durées de bits sont signalées par l'émetteur par une caractérisation (310) que contient la même trame de données ou une trame de données précédente.

14. Dispositif selon la revendication 13, **caractérisé en ce qu'**il présente des moyens pour exécuter un procédé de transfert de données selon l'une des revendications 2 à 9.

15. Dispositif de transfert de données en série dans un système de bus qui présente au moins deux participants qui changent des trames de données par l'intermédiaire du bus,
les participants décidant selon une identification quelles trames de données ils reçoivent,
les trames de données présentant une structure logique conforme à la norme CAN ISO 11898-1, **caractérisé en ce que**
l'alternance de la durée des bits est signalée par l'émetteur par une caractérisation (310) que contient la même trame de données ou l'une des trames de données précédentes, et
**en ce qu'**il présente des moyens qui permettent en fonction de la caractérisation (310) d'exclure la resynchronisation des bits, d'interrompre l'opération de réception et/ou de prendre un état de repos.

16. Dispositif selon la revendication 15, **caractérisé en ce que** la resynchronisation des bits est exclue et/ou l'opération de réception est interrompue et/ou un état de repos est pris si la caractérisation (310) permet de détecter que la trame de données qui contient la caractérisation présente deux valeurs différentes de la longueur de bits dans au moins deux plages.

17. Dispositif selon la revendication 16, **caractérisé en ce que** la resynchronisation des bits est exclue et/ou l'opération de réception est interrompue et/ou un état de repos est pris si la caractérisation (310) permet de détecter que la trame de données rendue détectable par la caractérisation ne doit pas être lue par le dispositif.

18. Dispositif selon l'une des revendications 13 à 17, **caractérisé en ce que** le dispositif peut être branché par un signal d'entrée et peut basculer entre un procédé selon la norme CAN ISO 11898-1 et le procédé modifié selon l'invention.
